# EUROPÄISCHE PATENTANMELDUNG

(11) **EP 4 060 374 A1**
(43) Veröffentlichungstag der Anmeldung: **21.09.2022**
(21) Anmeldenummer: 21162643.7
(22) Anmeldetag: 15.03.2021
(51) Int. Cl.: G01S 7/481, G01S 17/42

(54) **ERFASSUNG EINES OBJEKTS IN EINEM ÜBERWACHUNGSBEREICH**

(71) Anmelder: SICK AG, 79183 Waldkirch (DE)
(72) Erfinder: Jachmann, Fabian, 79102 Freiburg (DE)

(57) **Zusammenfassung**

Es wird ein optoelektronischer Sensor (10) zur Erfassung eines Objekts in einem Überwachungsbereich (20) angegeben, der einen Lichtsender (12) zum Aussenden eines Lichtbündels (16) in den Überwachungsbereich (20), einen Lichtempfänger (26) zum Erzeugen eines Empfangssignals aus dem von dem Objekt reflektierten Lichtbündel (22), eine Steuer- und Auswertungseinheit (46), die für die Erfassung von Objekten anhand des Empfangssignals ausgebildet ist, eine bewegliche erste Ablenkeinheit (18) zur periodischen Ablenkung des Lichtbündels (16), eine Scanantriebseinrichtung (28) zum periodischen Bewegen der ersten Ablenkeinheit (18) sowie eine zweite Ablenkeinheit (38) für eine zusätzliche Ablenkung umfasst. Dabei weist die zweite Ablenkeinheit (38) eine kardanische Lagerung (40, 42) mindestens der ersten Ablenkeinheit (18) auf.

## Beschreibung

Die Erfindung betrifft einen optoelektronischen Sensor, insbesondere Laserscanner, sowie ein Verfahren zur Erfassung eines Objekts in einem Überwachungsbereich nach dem Oberbegriff von Anspruch 1 beziehungsweise 15.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Für herkömmliche Laserscanner sind zwei grundsätzliche Prinzipien bekannt, die Lichtlaufzeit zu bestimmen. Bei phasenbasierten Verfahren wird das kontinuierliche Sendelicht moduliert und die Phasenverschiebung des empfangenen gegenüber dem gesendeten Licht ausgewertet. Bei pulsbasierten Verfahren oder Pulslaufzeitverfahren arbeitet der Sender in einem Einzelpulsbetrieb mit verhältnismäßig hohen Pulsenergien, und der Laserscanner misst Objektabstände anhand der Laufzeit zwischen dem Aussenden und Empfangen eines Einzellichtpulses. In einem beispielsweise aus der EP 2 469 296 B1 bekannten Pulsmittelungsverfahren wird für eine Messung eine Vielzahl von Einzelpulsen ausgesandt, und die Empfangspulse werden statistisch ausgewertet. Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen.

Laserscanner werden nicht nur für allgemeine Messaufgaben, sondern auch in der Sicherheitstechnik beziehungsweise dem Personenschutz zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Sicherheitslaserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten in der Regel pulsbasiert.

Sicherheitslaserscanner müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile. Letzteres betrifft insbesondere eine Frontscheibe des Sicherheitslaserscanners, die herkömmlich durch über den Umfang verteilte, lichtschrankenartige Detektoren auf ihre Transmissionsfähigkeit geprüft wird. Die Anforderungen an die Selbstdiagnose sind je nach Gefährdungspotential unterschiedlich hoch, was beispielsweise durch sogenannte Sicherheitsstufen oder Performancelevel ausgedrückt wird.

In einigen Anwendungen besteht Bedarf für eine räumliche Erfassung, d.h. einen 3D-Sensor. Dafür sind 3D-Kameras in verschiedenen Technologien bekannt, auch sogenannte Lichtlaufzeitkameras, die in jedem ihrer Pixel mit einem Phasenverfahren Abstände messen. Während jedoch ein Laserscanner einen Sichtbereich von bis zu 360° erreicht, sind Kameras mit ihrer Bildbreite auf typischerweise weniger 120° oder sogar weniger als 90° eingeschränkt. Damit könnte beispielsweise eine Fahrzeugfront nicht überwacht werden.

Es gibt verschiedene Ansätze, die bloß zweidimensionale Erfassung eines Laserscanners zu erweitern und so dessen große Reichweite und Scanwinkelbereich bei dreidimensionaler Erfassung zu nutzen. Dazu zählen Mehrlagenscanner mit mehreren Sende-Empfangseinheiten, deren Elevationswinkel zueinander leicht versetzt ist. Das ist mit dem üblichen Scanprinzip durch einen Drehspiegel schwer verträglich, weil die Ordnung der übereinanderliegenden Scanebenen mit der Drehbewegung durcheinandergerät. Stattdessen wird ein drehender Messkopf mit den Sende-Empfangseinheiten eingesetzt. Dafür wiederum sind etliche technische Herausforderungen zu lösen, insbesondere eine drahtlose Energie- und Datenübertragung, die für EMV-Probleme anfällig ist, sowie eine mechanische Schwing-Schock-Robustheit und Langlebigkeit. Das sind neben den hohen Entwicklungskosten einige der Gründe, warum es bisher keine mehrlagigen Sicherheitslaserscanner gibt, sondern nur solche mit einer einzigen Abtastebene.

Manche Laserscanner oder etwas allgemeiner LIDAR-Systeme (Light Detection and Ranging) versuchen, die mechanisch bewegten Komponenten, wie einen Drehspiegel oder einen rotierenden Messkopf, ganz zu ersetzen. Ein derartiger Solid-State-Laserscanner basiert auf einem MEMS-Spiegel, auch der Einsatz von Phased Arrays wird erwogen. Mit einem in zwei Richtung beweglichen makroskopischen Spiegel könnten auch 2D-Muster gezeichnet, insbesondere Lissajous-Figuren. Alle diese Ansätze rücken stärker in die Nähe einer 3D-Kamera und teilen deren Hauptnachteil eines begrenzten Winkelbereichs.

Ein Laserscanner nach der DE 10 2008 032 216 A1 sieht zwei Lichtablenkvorrichtungen vor, von denen die eine für die übliche scannende Rotation um eine erste Drehachse sorgt, wobei dann dieses scannende System insgesamt nochmals um eine weitere zweite Drehachse rotiert. Die jeweiligen Drehstellungen werden mit sicheren Inkrementalgebern überwacht. Die mechanische Konstruktion ist aber ausgesprochen aufwändig, und es bedarf einer drahtlosen Versorgung und Kommunikation.

Es gibt eine ganze Reihe von Vorschlägen, den Drehspiegel zusätzlich zu einer rotierenden Scanbewegung zu verkippen. Die DE 20 2011 110 290 U1 schlägt dazu ein Hubachselement vor, dass mit der Ablenkeinheit verbunden ist und mit einer Translationsbewegung längs der Drehachse angesteuert werden kann, die es in eine Schwenkbewegung der Ablenkeinheit übersetzt. In der EP 2 908 152 B1 wird eine Getriebekonstruktion oder ein Profilrad in Form einer mehrsegmentigen Kurvenscheibe oder eines Höhenprofilrads verwendet. Auch die US 2010/0073749 A1 weist eine Getriebeeinheit in einem Scanner auf, dessen Spiegel sowohl rotiert als auch verkippt wird. Die EP 2 746 808 B1 sieht eine Zwangsführung für den Drehspiegel vor, die das eine Ende des Spiegels während der Rotation seitlich am Gehäuse führt und in seiner Höhe variiert. In der EP 2894 493 rotiert eine autarke Kippaktorik mit. Die EP 1 965 225 A2 zeigt in diversen Ausführungsformen eine Vielzahl von mechanischen Umsetzungsmöglichkeiten für ein Verkippen des Drehspiegels. Keines dieser Konzepte zum Verkippen des Drehspiegels hat sich bisher in der Praxis bewähren können.

Ohne jeden Zusammenhang mit Laserscannern ist die kardanische Aufhängung bekannt, die ursprünglich einer passiven Lagestabilisierung beispielsweise eines Schiffskompasses dienen sollte. Heute wird dies zur Bildstabilisierung eingesetzt, beispielsweise in Drohnen, die ihre Orientierung mit einer IMU (Inertial Measurement Unit) messen und erforderlichenfalls ausgleichende Gegenbewegungen mit Motoren in den einzelnen Drehlagern der kardanischen Aufhängung ihrer Kamera durchführen (Gimbal).

Es ist daher Aufgabe der Erfindung, mit einem gattungsgemäßen Sensor eine verbesserte 3D-Erfassung zu erreichen.

Diese Aufgabe wird durch einen optoelektronischen Sensor, insbesondere Laserscanner, sowie ein Verfahren zur Erfassung eines Objekts in einem Überwachungsbereich nach Anspruch 1 beziehungsweise 15 gelöst. Ein Lichtsender sendet ein Lichtbündel in den Überwachungsbereich aus, vorzugsweise einen insbesondere kollimierten Sendelichtstrahl mit kleinem Querschnitt. Ein Lichtempfänger erzeugt aus dem reflektierten Lichtbündel ein Empfangssignal. Dabei wird hier zwischen gerichteter Reflexion und ungerichteter Streuung oder Remission begrifflich nicht unterschieden. Eine Steuer- und Auswertungseinheit erfasst die Objekte durch Auswertung des Empfangssignals und bestimmt dazu insbesondere die Lichtlaufzeit und somit den Abstand zu dem jeweiligen angetasteten Objekt.

Mit Hilfe einer beweglichen ersten Ablenkeinheit, also beispielsweise eines rotierenden Optikkopfes mit Lichtsender und Lichtempfänger oder eines rotierenden Drehspiegels, wird das ausgesandte Lichtbündel periodisch durch den Überwachungsbereich geführt. Die erste Ablenkeinheit wird dabei von einer Scanantriebseinrichtung oder einem Scanmotor angetrieben, insbesondere in Rotationsbewegung um eine Drehachse versetzt. Das entspricht der üblichen Scanbewegung eines 2D-Laserscanners mit Variation des Azimutwinkels, die eine Abtastebene erzeugt und mit jeder Umdrehung wiederholt und daher periodisch abtastet.

Mit einer zweiten Ablenkeinheit wird eine zusätzliche Ablenkung erzeugt. Die zweite Ablenkeinheit sorgt somit dafür, dass das Lichtbündel nicht lediglich über eine feste Abtastebene geführt wird, sondern zusätzlich aus jener Ebene herausgelenkt wird. Es entsteht eine Ablenkung in Elevation zusätzlich zu der von der Scanantriebseinrichtung erzeugten Scanbewegung im Azimut mit einem abgetasteten Raumwinkelbereich anstelle lediglich einer Abtastebene. Dies lässt sich auch als Neigen oder Verkippen der ursprünglichen zentralen Abtastebene oder der Drehachse beschreiben, deren Richtung dem Normalenvektor auf die jeweilige geneigte Abtastebene entspricht.

Die Erfindung geht von dem Grundgedanken einer kardanischen Lagerung beziehungsweise kardanischen Aufhängung der zweiten Ablenkeinheit für mindestens die erste Ablenkeinheit aus. Mindestens bedeutet in diesem Zusammenhang, dass je nach Ausführungsform nur die erste Ablenkeinheit oder die erste Ablenkeinheit gemeinsam mit weiteren Elementen des Sensors kardanisch gelagert ist. Die kardanische Lagerung überlagert der von der Scanantriebseinrichtung erzeugten periodischen Bewegung im Azimutwinkel eine Bewegung in Elevation. Die ohne die zweite Ablenkeinheit einzige feste Abtastebene kann durch die kardanische Lagerung in zwei orthogonale Richtungen geneigt werden. Es entsteht eine Art Taumelbewegung der Abtastebene oder gleichbedeutend der Drehachse mit dem Ergebnis einer 3D-Abtastung.

Die Erfindung hat den Vorteil, dass mit sehr einfachen Mitteln eine verlässliche und robuste 3D-Abtastung erreicht werden kann, die eine Reihe zusätzlicher Anwendungen erschließt, in denen dreidimensionale Daten erforderlich oder zumindest wünschenswert sind. Im Prinzip, in einigen Ausführungsformen sogar tatsächlich und weitgehend vollumfänglich, kann der bestehende Aufbau eines zweidimensional abtastenden Sensors übernommen und mit der kardanischen Lagerung auf die 3D-Funktionalität erweitert werden. Die kardanische Lagerung bedarf im Gegensatz zu manchen rotierenden Abtastprinzipien, insbesondere einem 3D-Laserscanner nach DE 10 2008 032 216 A1, keiner drahtlosen Energie- und Datenübertragung. Über die kardanische Lagerung ist weiterhin ein einfacher Kabelanschluss möglich, der vorzugsweise ein wenig Flexibilität zum Ausgleich von Kippbewegungen mitbringt.

Es soll noch betont werden, dass die erfindungsgemäße kardanische Lagerung oder Aufhängung keinesfalls lediglich einer Stabilisierung dient. Die erste Ablenkeinheit mit ihrer ursprünglichen zentralen Abtastebene und Drehachse soll dank der kardanischen Lagerung gerade nicht stabil gehalten werden, sondern im Gegenteil gezielt ihre Orientierung wechseln. Allerdings ist es eine denkbare vorteilhafte Zusatzfunktion, äußere Einwirkungen mit der kardanischen Lagerung aufzufangen, so dass die gewünschten Kipp- oder Taumelbewegungen auch unter rauen Bedingungen etwa in mobilen Anwendungen möglichst ungestört ablaufen.

Die zweite Ablenkeinheit für die kardanische Lagerung weist bevorzugt ein erstes Lager zum Verschwenken in einer ersten Richtung und ein zweites Lager zum Verschwenken in einer zu der ersten Richtung orthogonalen zweiten Richtung auf. Damit sind in der kardanischen Lagerung oder dem Gimbal zwei zueinander orthogonale Lager vorgesehen, insbesondere ein X-Drehlager und ein Y-Drehlager. Sie sind vorzugsweise in einer ausbalancierten Ruhelage im Azimutwinkelabstand von 90° in der zentralen Ebene der ersten Ablenkeinheit angeordnet. Die Abtastebene kann in den beiden Lagern um zwei zueinander orthogonale Achsen durch das Scanzentrum geneigt werden.

Bevorzugt lagert das erste Lager drehbeweglich ein erstes Halteelement um eine erste Achse, und das zweite Lager ist an dem ersten Halteelement angeordnet und lagert die erste Ablenkeinheit oder ein zweites Halteelement mit der daran angeordneten ersten Ablenkeinheit drehbeweglich um eine zweite Achse senkrecht zu der ersten Achse. Die beiden Drehlager wirken sozusagen sequentiell mechanisch gekoppelt. Das erste Lager ermöglicht dem ersten Halteelement oder Haltearm eine Drehung um eine erste Achse. Das zweite Lager insbesondere am anderen Ende des ersten Halteelements ermöglicht eine Drehung um eine zweite Achse in dem bereits um die erste Achse drehbaren System. Die beiden Achsen können als X-Achse und Y-Achse aufgefasst werden. Die erste Ablenkeinheit kann lediglich mittelbar und/oder mit weiteren Elementen oder in größeren Baugruppen in dem zweiten Lager gelagert sein, das soll hier nicht einschränkend verstanden werden und wird später anhand von Ausführungsformen konkretisiert.

Die kardanische Lagerung ist vorzugsweise aktiv ausgebildet und weist insbesondere eine erste Antriebseinheit zum Verschwenken in einer ersten Richtung und eine zweite Antriebseinheit zum Verschwenken in einer zweiten Richtung senkrecht zu der ersten Richtung auf. Eine derartige aktive kardanische Lagerung (Gimbal) ist folglich mit einer Aktorik für Bewegungen in X-Richtung und in Y-Richtung ausgerüstet. Damit ist die Neigung beliebig einstellbar und kann aktiv mit jedem Azimutwinkel angepasst werden, um dort eine gewünschte Elevation oder Scanhöhe einzustellen. Je nach Einstellung entsteht ein bestimmtes 3D-Scanmuster.

Die kardanische Lagerung weist bevorzugt mindestens einen Winkelsensor und/oder mindestens einen Trägheitssensor auf, und die Steuer- und Auswertungseinheit ist insbesondere dafür ausgebildet, die jeweilige Orientierung der ersten Ablenkeinheit zu bestimmen. Ein Winkelsensor gibt Rückmeldung über die jeweilige Winkelstellung in den beiden orthogonalen Richtungen oder Lagern der kardanischen Lagerung. Ein Trägheitssensor (IMU, Inertial Measurment Unit) misst letztlich die gleiche relevante Information, indem er ebenso ermöglicht, die Orientierung der ersten Ablenkeinheit festzustellen. Dank dieser Sensorik wird die Taumel- oder Kippbewegung in der kardanischen Lagerung erfasst. Damit ist eine Zuordnung zwischen Messungen und Richtung der Messung möglich, d.h. es kann eine 3D-Punktwolke erfasst werden. Abweichungen gegenüber einer gewünschten Taumelbewegung können ausgeregelt werden, fallen aber ohnehin nicht mehr stark ins Gewicht, da die Messwerte den richtigen Winkeln zugeordnet werden. Die hier angesprochenen Winkelsensoren sollten nicht mit dem üblichen Encoder eines herkömmlichen Laserscanners verwechselt werden, mit dem der aktuelle Scanwinkel gemessen wird, d.h. der durch die Scanantriebseinrichtung variierte Azimutwinkel der ersten Ablenkeinheit. Ein solcher Encoder ist vorzugsweise zusätzlich vorgesehen.

Die kardanische Lagerung ist bevorzugt federnd ausgebildet. Dazu können Federn, insbesondere Spiralfedern in den beiden Lagern vorgesehen sein. Es entsteht eine Art 2D-Federpendel. Die kardanische Aufhängung ist unabhängig von einer Federung vorzugsweise ausbalanciert, und entsprechend verlaufen deren beide orthogonale Drehachsen durch die Schwerpunkte des Sensors beziehungsweise des kardanisch gelagerten Anteils davon. Unter dieser Bedingung ist das 2D-Federpendel ebenfalls ausbalanciert und vollzieht eine gleichmäßige Taumelbewegung, und es bedarf nur einer äußerst geringen Energie, um die Taumelbewegung aufrecht zu erhalten.

Die kardanische Lagerung lässt vorzugsweise einen Elevationswinkel von höchstens 20°, höchstens 10° oder höchstens 5° zu. Der 3D-Raumbereich misst folglich in Elevation nur einige 10° oder sogar nur einige Grad, während im Azimut ein wesentlich größerer Winkelbereich von bis zu 360° abgedeckt wird. Größere Elevationswinkel Bereiche sind auch vorstellbar, erhöhen aber die Ansprüche an die kardanische Lagerung und die Anschlüsse zu den darin gelagerten Elementen. Ein recht eng begrenzter Taumelbereich genügt in vielen Anwendungen, etwa zum Ausgleich von Fahrtbewegungen in mobiler Anwendung oder für eine robuste Outdoor-Messung, in der sich Störungen durch Umwelteinflüsse bei Messung in verschiedenen Elevationswinkeln besser verteilen.

Der Sensor weist bevorzugt nur ein abtastendes Lichtbündel auf. Es handelt sich folglich um einen Sensor mit nur einem einzigen Scanstrahl, was dem Grundaufbau eines herkömmlichen zweidimensionalen Laserscanners mit einer einzigen Abtastebene entspricht, wobei jedoch erfindungsgemäß die Abtastebene taumelt und somit einen dreidimensionalen Raumbereich austastet. Es wäre alternativ denkbar, einen Mehrlagensensor mit mehreren Sende-Empfangseinheiten und Scanstrahlen in einer kardanischen Lagerung taumeln zu lassen. Es ist aber recht kostenträchtig, zwei verschiedene Maßnahmen für eine 3D-Erweiterung zu implementieren, daher wird ein einfacher Aufbau mit nur einem Scanstrahl bevorzugt.

Der Lichtsender weist bevorzugt eine höhere optische Ausgangsleistung auf als dies Augenschutzvorschriften für die Abtastung eine einzigen Abtastebene zulassen. Das ermöglicht robustere Erfassungen und eine höhere Reichweite. Dank der Taumelbewegung wird das ausgesandte Licht wesentlich breiter verteilt. Ein Auge wird daher auch im ungünstigsten Fall wesentlich kürzer gestreift und daher nicht geschädigt. Vorzugsweise ist dafür sicherzustellen, dass die Taumelbewegung in Elevation stark und schnell genug und ein Austrittsfenster des Sensors weit genug vom Scanzentrum entfernt ist, damit sich die Taumelbewegung keinesfalls nur innerhalb der Höhe eines an das Austrittsfenster gedrückten Auges abspielt.

Die zweite Ablenkeinheit ist bevorzugt dafür ausgebildet, die erste Ablenkeinheit in der kardanischen Lagerung in eine zweite periodische Bewegung zu versetzen. Die Abtastebene wird damit in eine schwingende Änderung der Neigung versetzt. Das gelingt insbesondere durch eine Sin-Cos-Ansteuerung der Antriebseinheiten oder Aktoren in den beiden Lagern. Es sind nun insgesamt drei Perioden einer Abtastung zu unterscheiden. Das ist zum ersten die Periode der von der Scanantriebseinrichtung erzeugten Bewegung oder Rotation der ersten Ablenkeinheit, die in einem herkömmlichen Laserscanner der Scanperiode entsprechend würde, mit der die dann einzige Abtastebene abgetastet wird. Hinzu kommt zum zweiten die periodische Bewegung in der kardanischen Lagerung. Daraus ergibt sich zum dritten eine überlagerte Periode der insgesamt erzeugten 3D-Abtastung, deren Periode sich dadurch bestimmt, wann die beiden anderen Perioden erstmals wieder gleichzeitig eine Ausgangsstellung erreichen. Das ist durch Wahl dieser beiden Perioden einstellbar.

Das periodische Bewegen der ersten Ablenkeinheit durch die Scanantriebseinrichtung und eine Bewegung in der kardanischen Lagerung sind bevorzugt derart ausgeführt und aufeinander abgestimmt, dass der Überwachungsbereich mit einem Muster aus zueinander versetzten Sinusabtastungen abgetastet wird. Dies ist ein bevorzugtes Beispiel für ein Scanmuster einer 3D-Abtastung. Die Abtastebene taumelt sinusförmig in der kardanischen Lagerung. Das Verhältnis der beiden Perioden der von der Scanantriebseinrichtung erzeugten Bewegung und der Bewegung in der kardanischen Lagerung bestimmt, wie dicht die sinusförmigen Abtastungen zueinander liegen und wann sich die 3D-Abtastung wiederholt.

Eine erste Frequenz der Ablenkung durch die Scanantriebseinrichtung ist bevorzugt größer als eine zweite Frequenz einer zweiten periodischen Bewegung in der kardanischen Lagerung. Die durch die Scanantriebseinrichtung erzeugte Bewegung, typischerweise eine Drehung, ist also schneller und vorzugsweise viel schneller als die Taumelbewegung. Beispielsweise beträgt die erste Frequenz wie von zweidimensionalen Laserscannern bekannt mindestens 10 Hz, vorzugsweise bis zu 50-100 Hz und mehr, und die zweite Frequenz höchstens 10 Hz und vorzugsweise nur einige Hz. Die erste Frequenz sollte kein Vielfaches der zweiten Frequenz sein, sonst ergibt sich kein dichtes Muster. Das Verhältnis sollte entsprechend einer gewünschten Kombination aus Dichte des Musters und Wiederholfrequenz der überlagerten 3D-Abtastung gewählt werden.

Die zweite Ablenkeinheit lagert bevorzugt nur die erste Ablenkeinheit oder nur die erste Ablenkeinheit mit der Scanantriebseinrichtung kardanisch, insbesondere eine als Drehspiegel ausgebildete erste Ablenkeinheit. Das ist eine von mehreren Varianten von Ausführungsformen. In dieser bevorzugten Ausführungsform wird nur die kleinste mögliche Masse kardanisch gelagert, die unbedingt erforderlich ist, nämlich die erste Ablenkeinheit selbst, die nochmals bevorzugt als Drehspiegel ausgebildet ist. Prinzipiell ist durch eine biegsame, flexible Welle der Scanantriebseinrichtung denkbar, dass tatsächlich ausschließlich die erste Ablenkeinheit beziehungsweise der Drehspiegel kardanisch gelagert wird. Das ist aber eine recht anfällige Konstruktion, so dass die Scanbetriebseinrichtung vorzugsweise ebenfalls noch kardanisch gelagert wird. Dann kann die erste Ablenkeinheit wie in einem stationären System gegenüber der Scanbetriebseinrichtung montiert sein und bewegt werden oder rotieren. Weitere Elemente werden aber in dieser Ausführungsform nicht kardanisch gelagert, wobei sich dieser Ausschluss auf die relevanten Anspruchsmerkmale bezieht, wie Lichtsender und Lichtempfänger, deren Optiken oder die Steuer- und Auswertungseinheit, und nicht auf konstruktiv erforderliche Elemente wie Befestigungsmittel, Leitungen, eine Motorhalterung oder eine Welle.

Die zweite Ablenkeinheit lagert in einer Variante bevorzugt eine Messeinheit zumindest mit dem Lichtsender und/oder dem Lichtempfänger kardanisch. In dieser Ausführungsform ist es nicht mehr die erste Ablenkeinheit allein beziehungsweise mit ihrer Scanantriebseinrichtung, sondern eine Messeinheit, die kardanisch gelagert wird. Die Messeinheit umfasst zumindest den Lichtsender oder den Lichtempfänger, vorzugsweise beides und gegebenenfalls auch noch zumindest einen Teil der Steuer- und Auswertungseinheit. Die erste Ablenkeinheit ist erfindungsgemäß kardanisch gelagert, so auch hier. Dabei sind noch zwei Untervarianten denkbar. Die Ablenkeinheit kann samt ihrer Scanantriebseinrichtung in der Messeinheit untergebracht sein, so dass beispielsweise ein Drehspiegel in der Messeinheit rotiert. Alternativ ist die Messeinheit selbst die erste Ablenkeinheit und wird insgesamt von der Scanantriebseinrichtung bewegt.

Die zweite Ablenkeinheit lagert in einer weiteren Variante bevorzugt einen Sensor, insbesondere Laserscanner, samt Lichtsender, Lichtempfänger, erster Ablenkeinheit, Scanantriebseinrichtung und Steuer- und Auswertungseinheit kardanisch, insbesondere ein Gehäuse des Sensors. Hier ist die motivierende Vorstellung, dass ein vorhandener Sensor, insbesondere zweidimensionaler Laserscanner, als Ganzes kardanisch gelagert wird. Dabei sind durchaus Weiterentwicklungen denkbar, die insgesamt zu einem homogenen Gerät führen. Insbesondere hinsichtlich der Anschlüsse und Gehäuseform können dabei Anpassungen erfolgen. Damit wird eine 3D-Abtastung gleichsam nachgerüstet. Die Sensordaten, insbesondere 2D-Laserscannerdaten, werden vorzugsweise in einem übergeordneten Teil der Steuer- und Auswertungseinheit, die eine interne Steuer- und Auswertungseinheit des kardanisch gelagerten Sensors ergänzt, mit den jeweiligen Winkeln der kardanischen Lagerung zu 3D-Punktwolken verrechnet.

Der Sensor ist vorzugsweise als Sicherheitssensor, insbesondere Sicherheitslaserscanner, im Sinne einer Sicherheitsnorm für Maschinensicherheit oder berührungslos wirkende Schutzeinrichtungen ausgebildet und weist insbesondere einen Sicherheitsausgang für die Ausgabe eines sicherheitsgerichteten Absicherungssignals aufweist. Ein Sicherheitssensor oder Sicherheitsscanner ist ein sicherer Sensor beziehungsweise sicherer Laserscanner im Sinne einer Sicherheitsnorm und darf deshalb zum Personenschutz an Gefahrenquellen eingesetzt werden. Einleitend sind beispielhaft einige heute gültige einschlägige Sicherheitsnormen genannt, die sich regional und zukünftig in ihrer konkreten Formulierung, nicht aber ihrem grundsätzlichen Ansatz der Fehlervermeidung beziehungsweise rechtzeitigen Fehleraufdeckung zur Vermeidung von Unfällen durch Defekte oder sonstiges unerwartetes Verhalten unterscheiden. Wird eine Gefahr erkannt oder kann die eigene Funktionsfähigkeit nicht gewährleistet werden, so wird dies an dem Sicherheitsausgang signalisiert, insbesondere einem OSSD (Output Signal Switching Device). Dieser Sicherheitsausgang ist als Teil der normausfüllenden Maßnahmen sicher, etwa zweikanalig ausgeführt, und dient erforderlichenfalls zur Einleitung einer sicherheitsgerichteten Maßnahme wie einem Notaus oder etwas allgemeiner dem Herstellen eines sicheren Zustands.

Die Steuer- und Auswertungseinheit ist bevorzugt für eine Schutzfeldauswertung ausgebildet, in der bestimmt wird, ob sich ein Objekt in mindestens einem konfigurierten Schutzfeld innerhalb des Überwachungsbereichs befindet. Damit ist eine bewährte Sicherheitsauswertung zur Erkennung von Gefahren bereits in den Sensor integriert, der direkt ein sicherheitsgerichtetes Absicherungssignal für eine Maschine oder eine zwischengeschaltete Sicherheitssteuerung bereitstellt. Die Schutzfelder können dreidimensional definiert werden. Nicht jeder Schutzfeldeingriff führt zwangsläufig zu einer sicherheitsgerichteten Reaktion, es können noch weitere Prüfungen erfolgen, etwa auf eine Mindestgröße des eingreifenden Objekts, eine Mindestdauer des Eingriffs über mehrere Scans hinweg, und es kann auch im Schutzfeld zulässige Objekte beziehungsweise deaktivierte Teilbereich geben (Muting, Blanking).

Vorzugsweise wird pulsbasiert gemessen, dazu mit dem Lichtstrahl ein Sendepuls ausgesandt und aus dem remittierten Lichtstrahl ein entsprechender Empfangspuls erzeugt. Die Steuer- und Auswertungseinheit ist bevorzugt dafür ausgebildet, nacheinander mehrere Sendelichtpulse auszusenden, die entsprechenden Empfangspulse mit mindestens einer Schwelle abzutasten und in einem Histogramm zu akkumulieren und die Lichtlaufzeit aus dem Histogramm zu bestimmen. Diese Ausführungsform arbeitet also mit einem Mehrpulsverfahren wie in der einleitend genannten EP 2 469 296 B1. Die Signaldynamik kann für die beitragenden Einzelmessungen und/oder im Histogramm korrigiert werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Laserscanners;
- Fig. 2a-b: eine schematische Schnittdarstellung beziehungsweise Draufsicht einer kardanischen Lagerung für die Ablenkeinheit eines Laserscanners;
- Fig. 3a: eine schematische Schnittdarstellung einer Messeinheit eines Laserscanners;
- Fig. 3b-c: eine schematische Schnittdarstellung beziehungsweise Draufsicht einer kardanischen Lagerung einer Messeinheit eines Laserscanners;
- Fig. 4a-b: eine schematische Schnittdarstellung beziehungsweise Draufsicht einer kardanischen Lagerung eines Laserscanners; und
- Fig. 5: eine Darstellung eines beispielhaften 3D-Abtastmusters eines Laserscanners mit kardanischer Aufhängung.

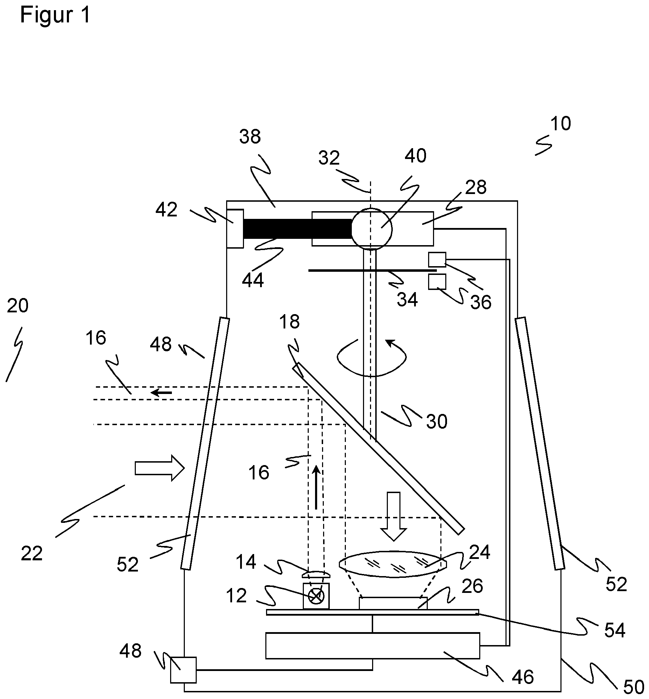

Figur 1 zeigt eine schematische Schnittdarstellung durch einen als Laserscanner ausgebildeten Sensor 10. Der Laserscanner ist vorzugsweise als Sicherheitslaserscanner ausgebildet, was bedeutet, dass ein Einsatz im Personenschutz möglich ist, also Maßnahmen entsprechend der einleitend genannten Normen getroffen sind, die einen unentdeckten Ausfall der Funktion entsprechend dem Sicherheitsniveau oder Performancelevel ausschließen.

Ein Lichtsender 12, beispielsweise mit einer Laserlichtquelle, erzeugt mit Hilfe einer Sendeoptik 14 einen Sendelichtstrahl 16, der an einer ersten Ablenkeinheit 18 in einen Überwachungsbereich 20 umgelenkt wird. Fällt der Sendelichtstrahl 16 in dem Überwachungsbereich 20 auf ein Objekt, so gelangt remittiertes Licht 22 wieder zu dem Sensor 10 zurück und wird dort über die erste Ablenkeinheit 18 und mittels einer Empfangsoptik 24 von einem Lichtempfänger 26 detektiert, beispielsweise einer oder mehreren Photodioden, APDs (Avalanche Photo Diode) oder SPADs (Single-Photon Avalanche Diode).

Die erste Ablenkeinheit 18 ist in dieser Ausführungsform als Drehspiegel ausgestaltet, die durch Antrieb eines Motors 28 mit einer Welle 30 kontinuierlich um eine Drehachse 32 rotiert. Die jeweilige Winkelstellung des Motors 28 beziehungsweise der ersten Ablenkeinheit 18 wird über einen Encoder erkannt, der beispielsweise eine Codescheibe 34 und eine Gabellichtschranke 36 umfasst. Der von dem Lichtsender 12 erzeugte Sendelichtstrahl 16 überstreicht somit während der Rotation zunächst eine Abtastebene in dem Überwachungsbereich 20. Anstelle eines Drehspiegels ist auch möglich, die erste Ablenkeinheit 18 als rotierenden Messkopf auszubilden, in dem Lichtsender 12 und/oder Lichtempfänger 26 und möglicherweise weitere Elemente untergebracht sind.

Der periodischen Ablenkung mittels der ersten Ablenkeinheit 18 wird eine Kippbewegung in zwei orthogonalen Richtungen überlagert, so dass je nach Veranschaulichung die Abtastebene oder die Drehachse 32 taumelt. Dafür ist eine zweite Ablenkeinheit 38 mit einer kardanischen Lagerung oder kardanischen Aufhängung vorgesehen (Gimbal), die in Figur 1 nur ganz schematisch mit einem ersten Lager 40, einem zweiten Lager 42 und einem Halteelement oder Haltearm 44 dazwischen dargestellt ist. Die kardanische Lagerung wird weiter unten noch ausführlicher erläutert.

Wird nun von dem Lichtempfänger 26 remittiertes Licht 22 aus dem Überwachungsbereich 20 empfangen, so kann aus der von dem Encoder 34, 36 gemessenen Winkelstellung der ersten Ablenkeinheit 18 auf die Winkellage des angetasteten Objektes im Azimut und aus der Stellung der zweiten Ablenkeinheit 38 auf die Scanhöhe beziehungsweise die Winkellage in Elevation geschlossen werden. Zusätzlich wird vorzugsweise die Lichtlaufzeit von Aussenden eines Lichtsignals bis zu dessen Empfang nach Reflexion an dem jeweiligen Objekt in dem Überwachungsbereich 20 ermittelt und unter Verwendung der Lichtgeschwindigkeit auf die Entfernung des Objektes von dem Sensor 10 geschlossen. Dazu wird vorzugsweise ein Pulslaufzeitverfahren eingesetzt, also der Sendelichtstrahl 16 mit kurzen Pulsen moduliert und die Lichtlaufzeit zwischen Aussenden und Empfangen eines Pulses bestimmt. Dabei sind Einzelpulsverfahren und Pulsmittelungsverfahren möglich.

Eine Steuer- und Auswertungseinheit 46 ist mit dem Lichtsender 12, dem Lichtempfänger 26, dem Motor 28, dem Encoder 36 und einem nicht gezeigten Sensor der zweiten Ablenkeinheit 38 zur Bestimmung der momentanen Orientierung der Drehachse 32 verbunden. Die Steuer- und Auswertungseinheit 46 steuert den Messablauf, moduliert dafür unter anderem den Sendelichtstrahl 16, bestimmt die Lichtlaufzeit und erhält Informationen über die Winkelstellungen. Somit können über die Winkel und die Entfernung 3D-Punktwolken aller Objekte in dem Überwachungsbereich 20 erzeugt werden, oder wahlweise 3D-Scandaten in anderer Repräsentation.

In bevorzugter sicherheitstechnischer Anwendung prüft die Steuer- und Auswertungseinheit 46 weiterhin, ob ein unzulässiges Objekt in einen innerhalb des Überwachungsbereichs 20 festgelegten Schutzbereich eingreift. Ist das der Fall, wird über einen Sicherheitsausgang 48 (OSSD, Output Signal Switching Device) ein Absicherungssignal an eine überwachte Gefahrenquelle, beispielsweise eine Maschine ausgegeben. Es kann zusätzliche nicht dargestellte Schnittstellen zur Ausgabe von rohen oder vorverarbeiteten Messdaten oder beispielsweise zum Parametrieren des Sensors 10 geben. Alle genannten Funktionskomponenten sind in einem Gehäuse 50 angeordnet, das im Bereich des Lichtaus- und Lichteintritts eine Frontscheibe 52 aufweist.

Die Darstellung in Figur 1 ist rein schematisch zur Erläuterung des Funktionsprinzips. Es sind viele Varianten von periodisch abtastenden Sensoren oder Laserscannern bekannt. Beispielsweise kann die Gestaltung von Sendeoptik 14 und Empfangsoptik 24 variiert werden, etwa über einen strahlformenden Spiegel als Ablenkeinheit, eine andere Anordnung der Linsen oder zusätzliche Linsen. In der Ausführungsform nach Figur 1 liegen Lichtsender 12 und Lichtempfänger 26 vorzugsweise sehr nahe beieinander, um im Nahbereich ein ausreichendes Empfangssignal zu erhalten, und sind auf einer gemeinsamen Leiterkarte 54 untergebracht. Auch das ist nur ein Beispiel, denn es können eigene Leiterkarten sowie andere Anordnungen beispielsweise mit mehr Abstand oder einem gegenseitigen Höhenversatz vorgesehen sein. Es sind auch Laserscanner in einer koaxialen Anordnung bekannt, also mit gemeinsamer optischer Achse von Lichtsender 12 und Lichtempfänger 26.

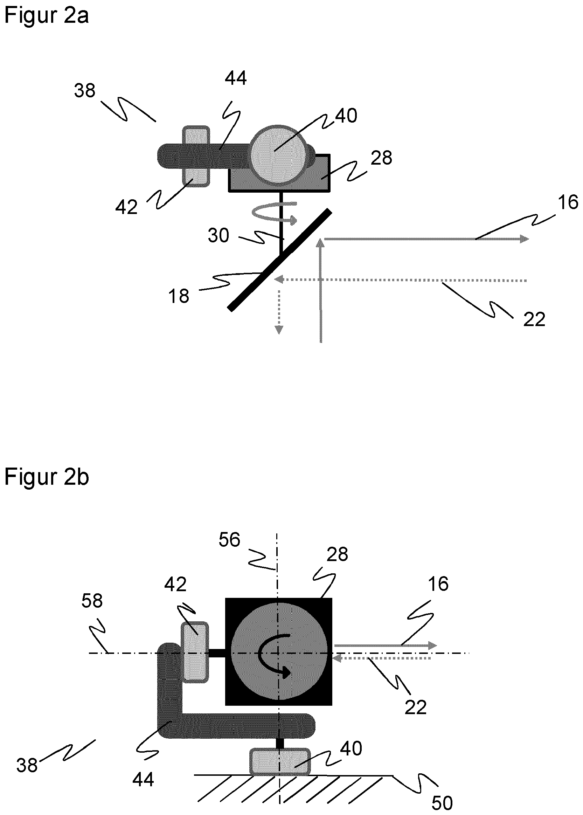

Die Figuren 2a-b zeigen in einer schematischen Schnittdarstellung beziehungsweise Draufsicht eine Ausführungsform einer kardanischen Lagerung für einen Sensor 10. Wie in der Darstellung gemäß Figur 1 wird die erste Ablenkeinheit 18 mit dem Motor 28 und der Welle 30 kardanisch gelagert. Damit bewegt die zweite Ablenkeinheit 38 vorteilhaft nur eine möglichst geringe Masse. Das Gewicht der ersten Ablenkeinheit 18 beträgt typischerweise höchstens zehn Prozent des Gesamtgewichts des Sensors 10. Es können noch nicht dargestellte Elemente hinzukommen, beispielsweise ein Motorhalter und dergleichen konstruktive Komponenten, und auch eine Anschlussleitung für die Versorgung und den Datenaustausch verläuft zumindest teilweise in den kardanisch gelagerten Komponenten. In anderen Ausführungsformen, die nachfolgend erläutert werden, ist ein größerer Funktionsblock kardanisch gelagert. Umgekehrt ist grundsätzlich auch denkbar, mit Hilfe einer flexiblen Welle 30 die erste Ablenkeinheit 18 allein, ohne den Motor 28, kardanisch zu lagern.

Ein erstes Lager 40 der kardanischen Lagerung ist an dem stationären Teil des Sensors 10 fixiert, beispielsweise an dessen Gehäuse 50. In diesem ersten Lager 40 ist der Haltearm 44 um eine erste Achse 56 drehbeweglich gelagert. An dem anderen Ende des Haltearm 44 ist das zweite Lager 42 angeordnet, in dem mindestens mittelbar die erste Ablenkeinheit 18 um eine zweite Achse 58 drehbeweglich gelagert ist. Der Haltearm 44 selbst ist nur vorzugsweise rechtwinklig, sollte jedoch die Möglichkeit bieten, das zweite Lager 42 gegenüber dem ersten Lager 40 orthogonal zu halten. Insgesamt gibt es daher zwei zueinander orthogonale Drehlager, und die erste Ablenkeinheit 18 kann sich in zwei zueinander orthogonalen Achsen 56, 58 drehen, die als X-Achse und Y-Achse bezeichnet werden können. Das führt zu einer Kipp- oder Taumelbewegung der Drehachse 32 beziehungsweise der Abtastebene, so dass der Sensor 10 nunmehr nicht länger eine feste Abtastebene, sondern einen dreidimensionalen Raumbereich abgetastet.

Die kardanische Lagerung der zweiten Ablenkeinheit 38 sollte industriellen Ansprüchen gerecht werden. Eine hohe Herausforderung ist die Lebensdauerstabilität für einen Dauereinsatz von zehn bis zwanzig Jahren, wobei an Maschinen oder im mobilen Einsatz etwa in Fahrzeugen eine Schwing-Schock-Belastung hinzukommt.

Vorzugsweise sind die Lager 40, 42 nicht lediglich passiv, sondern mit einer Aktorik ausgerüstet. Die kardanische Lagerung wird nicht lediglich für kleine Ausgleichbewegungen genutzt wie bei einer Kamerastabilisierung, sondern sie soll die Taumelbewegung für die 3D-Abtastung erzeugen und ist dazu wie der Motor 28 fortlaufend aktiv. In der Aktorik werden bevorzugt verschleißarme bürstenlose Motoren eingesetzt. Die Steuer- und Auswertungseinheit 46 koordiniert die jeweiligen Bewegungen der ersten Ablenkeinheit 18 und der zweiten Ablenkeinheit 38.

Umgekehrt ist vorzugsweise eine Feedbacksensorik in der zweiten Ablenkung hat 38 vorgesehen, damit die Steuer- und Auswertungseinheit 46 die jeweilige Neigung der ersten Ablenkeinheit 18 oder gleichbedeutend der Drehachse 32 oder der momentanen Abtastebene kennt und die Elevation der aktuellen Messung richtig dreidimensional zuordnet beziehungsweise erforderlichenfalls die Bewegungen nachregelt. Die Feedbacksensorik weist beispielsweise Winkelsensoren oder Encoder in den Lagern 40, 42 und/oder einen Trägheitssensor (IMU, Intertial Measurement Unit) im kardanisch aufgehängten Bezugssystem der ersten Ablenkeinheit 18 auf.

Die kardanische Lagerung sollte bevorzugt durch die Schwerpunkte der kardanisch gelagerten Komponenten gehen, folglich ausbalanciert sein. Das erfordert dann nur minimale Energie für die Anregung und Aufrechterhaltung der Taumelbewegung. Weiterhin ist denkbar, Federn und insbesondere Spiralfedern vorzusehen, beispielsweise Spiralfedern an den Lagern 40, 42. Das ergib dann ein 2D-Federpendel, das die Taumelbewegung weitgehend schon von selbst aufrecht hält.

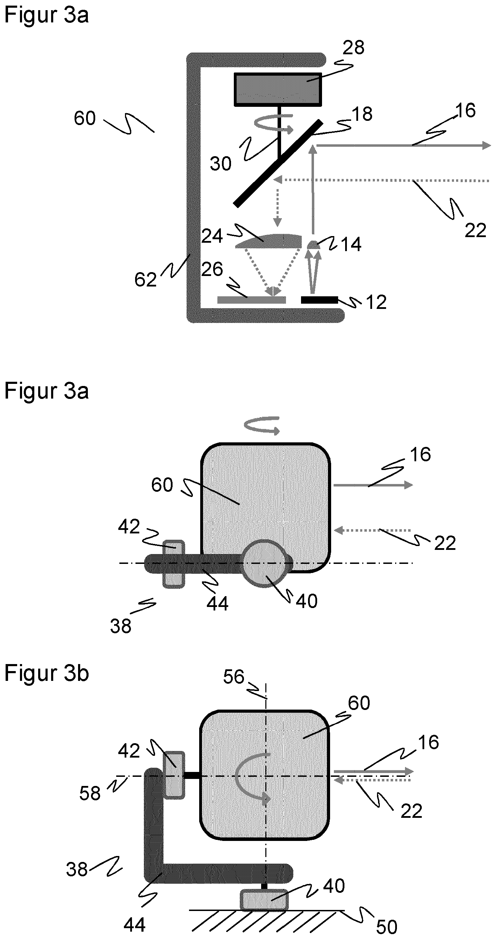

Die Figuren 3a-c illustrieren eine weitere Ausführungsform des Sensors 10, bei dem die zweite Ablenkeinheit 38 nun eine Messeinheit 60 anstelle nur der ersten Ablenkeinheit 18 kardanisch lagert. Figur 3a zeigt die Messeinheit 60. Das ist weitgehend eine Wiederholung der Figur 1, die nicht erneut erläutert wird. Die Figuren 3b-c zeigen in einer schematischen Schnittdarstellung beziehungsweise Draufsicht eine kardanische Lagerung der Messeinheit 60.

Die dargestellte Messeinheit 60 umfasst den Lichtsender 12 und den Lichtempfänger 26 samt deren Optiken 14, 24 sowie diejenigen Elemente, die auch schon in Figur 2a-b kardanisch gelagert sind, d.h. die erste Ablenkeinheit 18 und den Motor 28 mit der Welle 30. Hinzu kommt vorzugsweise ein Messeinheit-Gehäuse 62, damit die Messeinheit 60 mechanisch abgeschlossen ist. In anderen Ausführungsformen ist nur der Lichtsender 12 beispielsweise in Kombination mit einem als Zeile oder Matrix ausgebildeten nicht bewegten Lichtempfänger 26 oder nur der Lichtempfänger 26 in Kombination mit einem Solid-State-Scanmechanismus des Lichtsenders 12 in der Messeinheit 60 angeordnet.

In dieser Ausführungsform wird mit der Messeinheit 60 ein größeres Modul kardanisch gelagert. Der Nachteil der größeren zu bewegenden Masse wird dafür in Kauf genommen, dass ein umfassender Funktionsblock aus einem bestehenden Design für zweidimensionale Sensoren übernommen werden kann.

In einer weiteren, nicht gezeigten Ausführungsform ist die erste Ablenkeinheit 18 kein Drehspiegel, sondern dadurch realisiert, dass die Messeinheit 60 als Ganzes von dem Motor 28 um die Drehachse 32 in Bewegung versetzt wird. Demnach befindet sich dann anders als in Figur 3a der Motor 28 außerhalb der Messeinheit 60. Vorzugsweise ist dabei der Motor 28 in der kardanischen Lagerung untergebracht. Es wäre alternativ denkbar, durch eine flexible Welle 30 einen stationären Motor 28 zu verwenden, aber die mechanische Anfälligkeit wiegt die eingesparte mitbewegte Masse in der Regel nicht auf.

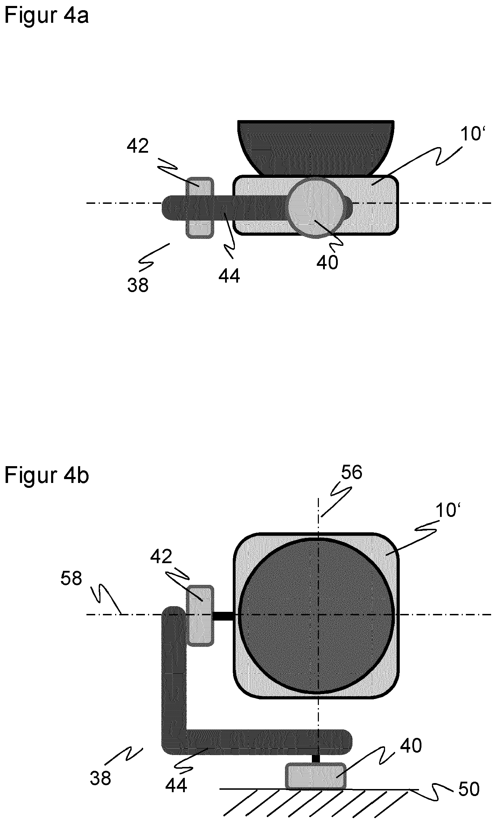

Die Figuren 4a-b zeigen in einer schematischen Schnittdarstellung beziehungsweise Draufsicht eine weitere Ausführungsform des Sensors 10, bei dem die zweite Ablenkeinheit 38 nun einen ganzen Laserscanner oder Sensor 10' kardanisch lagert. Im Gegensatz zu einem erfindungsgemäßen Sensor 10 wie beispielsweise gemäß Figur 1 handelt es sich bei dem kardanisch gelagerten Sensor 10' der Figuren 4a-b um einen zweidimensionalen, also im Prinzip herkömmlichen Sensor. Die dreidimensionale Abtastung wird durch die kardanische Aufhängung gleichsam nachgerüstet.

Das hat den Vorteil, dass ein bestehender Sensor 10, insbesondere ein Sicherheitsscanner mit seinen zahllosen Funktionen und Maßnahmen für die Erfüllung von Sicherheitsnormen, im Ganzen übernommen werden kann. Ein nicht gezeigter übergeordneter Anteil der Steuer- und Auswertungseinheit 46 verrechnet die 2D-Scandaten des kardanisch gelagerten Sensors 10' mit den Winkelinformationen der zweiten Ablenkeinheit 38 zu dreidimensionalen Messdaten. Dem können sich dann beispielsweise dreidimensionale Schutzfeldauswertungen anschließen.

Alternativ ist auch denkbar, den Sensor 10' so arbeiten zu lassen wie bisher. Ein Sicherheitsscanner beispielsweise misst dann wie üblich zweidimensional, wertet seine Schutzfelder aus und erzeugt erforderlichenfalls ein sicherheitsgerichtetes Absicherungssignal. Durch die kardanische Aufhängung hat der Sicherheitsscanner tatsächlich und quasi unbewusst Schutzfelder mit einer Ausdehnung in Elevation erfasst. Das nutzt nicht alle Möglichkeiten aus, die erfindungsgemäß die kardanische Aufhängung für eine dreidimensionale Abtastung bietet, erzielt aber dafür eine gewisse dreidimensionale Erweiterung mit sehr wenig Aufwand.

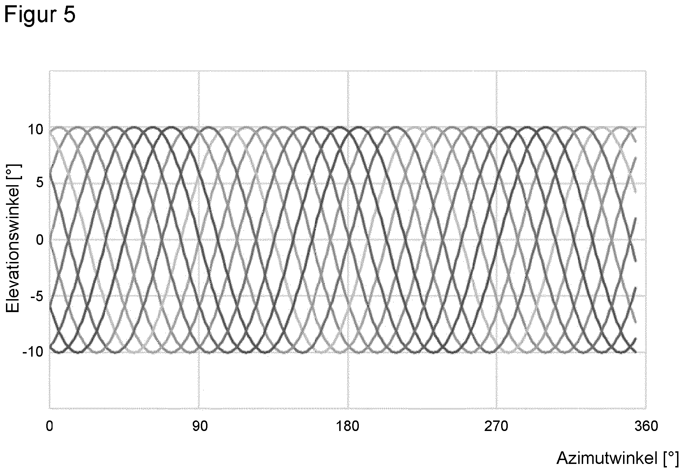

Figur 5 zeigt ein beispielhaftes 3D-Abtastmusters des Sensors 10. Der auf der X-Achse aufgetragene Azimutwinkel entspricht einer Rotationsbewegung der ersten Ablenkeinheit 18. Dem überlagert sich die Taumelbewegung der zweiten Ablenkeinheit 38 und damit ein variierender Elevationswinkel, der auf der Y-Achse aufgetragen ist. In diesem Fall wird in der kardanischen Aufhängung eine vorteilhafte Schwingung erzeugt, so dass sich eine sinusartige Abtastung ergibt. Der dargestellte Azimutwinkelbereich von 360° wird nicht in allen Sensoren 10 erfasst, insbesondere bei Sicherheitslaserscannern gibt es einen Totwinkelbereich für Referenzmessungen und dergleichen. Ein möglichst großer Sichtwinkel ist aber angestrebt, und es gibt auch Designs für eine Rundumsicht von 360°.

Das Verhältnis der Perioden der Bewegung in Azimut und Elevation bestimmt, wie dicht dieses Sinusmuster liegt und nach welcher resultierenden Periode sich das gesamte 3D-Abtastmuster wiederholt. Typischerweise ist die von dem Motor 28 erzeugt Bewegung über den Azimutwinkel deutlich schneller als diejenige in der kardanischen Lagerung über den Elevationswinkel. Ein Laserscanner beispielsweise rotiert mit mindestens zehn Hz, teilweise sogar einigen hundert Hz. Die zweite Ablenkeinheit 38 erzeugt eine Bewegung eher im Bereich von weniger als zehn Hz, beispielsweise 2-5 Hz. Rotiert beispielsweise ein Laserscanner mit 40Hz, so lassen sich damit 8 bis 20 Lagen realisieren, die in 200 bis 500 ms erfasst sind. In Figur 5 ist das Verhältnis 10:1, so dass zehn Lagen oder sinusförmige Verläufe mit jeweils 36° Phasenversatz entstehen.

Bereits eine Auslenkung in Elevation um wenige Grad ist in vielen Anwendungen von großem Vorteil und durch eine kardanische Lagerung leicht erreichbar. In Figur 5 wird beispielhaft ein Elevationswinkelbereich von -10° bis +10° abgetastet, andere Intervalle wie [-20°, 20°], [-5°, 5°] und dergleichen sind ebenso denkbar. Der Elevationswinkelbereich muss auch nicht zwingend zentriert liegen, aber das erfordert dann stärkere aktive Eingriffe der Aktoren derzweiten Ablenkeinheit 38. Insgesamt ist ein sinusartiges Muster nur ein Beispiel. Eine aktive kardanische Aufhängung kann im Prinzip den Elevationswinkel zu jedem Azimutwinkel frei wählen, so dass grundsätzlich beliebige 3D-Muster erzeugt werden können.

Ein weiterer Vorteil der zusätzlichen Auslenkung in Elevation ist die Möglichkeit, den Lichtsender 12 mit einer höheren Ausgangsleistung zu betreiben und damit eine höhere Messrate oder größere Reichweite zu erzielen. Ein Betrachter kann sich dem Scanzentrum höchstens bis zu der Frontscheibe 52 annähern und deckt damit nur einen gewissen Elevationswinkelbereich ab. Daher wird das Auge kürzer überstrichen als bei einem klassischen Laserscanner, und Augenschutzbedingungen (Eye Safety) sind trotz höherer optischer Ausgangsleistung immer noch eingehalten.

## Patentansprüche

1. Optoelektronischer Sensor (10), insbesondere Laserscanner, zur Erfassung eines Objekts in einem Überwachungsbereich (20), wobei der Sensor (10) einen Lichtsender (12) zum Aussenden eines Lichtbündels (16) in den Überwachungsbereich (20), einen Lichtempfänger (26) zum Erzeugen eines Empfangssignals aus dem von dem Objekt reflektierten Lichtbündel (22), eine Steuer- und Auswertungseinheit (46), die für die Erfassung von Objekten anhand des Empfangssignals ausgebildet ist, eine bewegliche erste Ablenkeinheit (18) zur periodischen Ablenkung des Lichtbündels (16), eine Scanantriebseinrichtung (28) zum periodischen Bewegen der ersten Ablenkeinheit (18) sowie eine zweite Ablenkeinheit (38) für eine zusätzliche Ablenkung aufweist,
**dadurch gekennzeichnet,**
**dass** die zweite Ablenkeinheit (38) eine kardanische Lagerung (40, 42) mindestens der ersten Ablenkeinheit (18) aufweist.

2. Sensor (10) nach Anspruch 1,
wobei die zweite Ablenkeinheit (38) für die kardanische Lagerung ein erstes Lager (40) zum Verschwenken in einer ersten Richtung und ein zweites Lager (42) zum Verschwenken in einer zu der ersten Richtung orthogonalen zweiten Richtung aufweist, wobei insbesondere das erste Lager (42) ein erstes Halteelement (44) um eine erste Achse (56) drehbeweglich lagert, das zweite Lager (42) an dem ersten Halteelement (44) angeordnet ist und die erste Ablenkeinheit (18) oder ein zweites Halteelement mit der daran angeordneten ersten Ablenkeinheit (18) um eine zweite Achse (58) senkrecht zu der ersten Achse (56) drehbeweglich lagert.

3. Sensor (10) nach Anspruch 1 oder 2,
wobei die kardanische Lagerung (40, 42) aktiv ausgebildet ist, insbesondere eine erste Antriebseinheit zum Verschwenken in einer ersten Richtung und eine zweite Antriebseinheit zum Verschwenken in einer zweiten Richtung senkrecht zu der ersten Richtung aufweist.

4. Sensor (10) nach einem der vorhergehenden Ansprüche,
wobei die kardanische Lagerung (40, 42) mindestens einen Winkelsensor und/oder mindestens einen Trägheitssensor aufweist und insbesondere die Steuer- und Auswertungseinheit (46) dafür ausgebildet ist, die jeweilige Orientierung der ersten Ablenkeinheit (18) zu bestimmen.

5. Sensor (10) nach einem der vorhergehenden Ansprüche,
wobei die kardanische Lagerung (40, 42) federnd ausgebildet ist.

6. Sensor (10) nach einem der vorhergehenden Ansprüche,
wobei die kardanische Lagerung (40, 42) einen Elevationswinkel von höchstens 20°, höchstens 10° oder höchstens 5° zulässt.

7. Sensor (10) nach einem der vorhergehenden Ansprüche,
der nur ein abtastendes Lichtbündel (16) aufweist.

8. Sensor (10) nach einem der vorhergehenden Ansprüche,
wobei der Lichtsender (12) eine höhere optische Ausgangsleistung aufweist als dies Augenschutzvorschriften für die Abtastung eine einzigen Abtastebene zulassen.

9. Sensor (10) nach einem der vorhergehenden Ansprüche,
wobei die zweite Ablenkeinheit (38) dafür ausgebildet ist, die erste Ablenkeinheit (18) in der kardanischen Lagerung (40, 42) in eine zweite periodische Bewegung zu versetzen und/oder wobei das periodische Bewegen der ersten Ablenkeinheit (18) durch die Scanantriebseinrichtung (28) und eine Bewegung in der kardanischen Lagerung (40, 42) derart ausgeführt und aufeinander abgestimmt sind, dass der Überwachungsbereich (20) mit einem Muster aus zueinander versetzten Sinusabtastungen abgetastet wird.

10. Sensor (10) nach einem der vorhergehenden Ansprüche,
wobei eine erste Frequenz der Ablenkung durch die Scanantriebseinrichtung (28) größer ist als eine zweite Frequenz einer zweiten periodischen Bewegung in der kardanischen Lagerung (40, 42), insbesondere die erste Frequenz mindestens 10 Hz und die zweite Frequenz höchstens 10 Hz beträgt.

11. Sensor (10) nach einem der vorhergehenden Ansprüche,
wobei die zweite Ablenkeinheit (38) nur die erste Ablenkeinheit (18) oder nur die erste Ablenkeinheit (18) mit der Scanantriebseinrichtung (28) kardanisch lagert, insbesondere eine als Drehspiegel ausgebildete erste Ablenkeinheit (18).

12. Sensor (10) nach einem der Ansprüche 1 bis 10,
wobei die zweite Ablenkeinheit (38) eine Messeinheit (60) zumindest mit dem Lichtsender (12) und/oder dem Lichtempfänger (26) kardanisch lagert.

13. Sensor (10) nach einem der Ansprüche 1 bis 10,
wobei die zweite Ablenkeinheit (38) einen Sensor (10'), insbesondere Laserscanner, samt Lichtsender (12), Lichtempfänger (26), erster Ablenkeinheit (18), Scanantriebseinrichtung (28) und Steuer- und Auswertungseinheit (46) kardanisch lagert, insbesondere ein Gehäuse (50) des Sensors (10').

14. Sensor (10) nach einem der vorhergehenden Ansprüche,
der als Sicherheitssensor, insbesondere Sicherheitslaserscanner, im Sinne einer Sicherheitsnorm für Maschinensicherheit oder berührungslos wirkende Schutzeinrichtungen ausgebildet ist und insbesondere einen Sicherheitsausgang (48) für die Ausgabe eines sicherheitsgerichteten Absicherungssignals aufweist, wobei insbesondere die Steuer- und Auswertungseinheit (46) für eine Schutzfeldauswertung ausgebildet ist, in der bestimmt wird, ob sich ein Objekt in mindestens einem konfigurierten Schutzfeld innerhalb des Überwachungsbereichs (20) befindet.

15. Verfahren zur Erfassung eines Objekts in einem Überwachungsbereich (20), bei dem ein Lichtbündel (12) in den Überwachungsbereich (20) ausgesandt, aus dem von dem Objekt reflektierten Lichtbündel (22) ein Empfangssignal erzeugt und das Empfangssignal für die Erfassung des Objekts ausgewertet wird, wobei das Lichtbündel (12) periodisch in einer ersten Ablenkung (18) und in einer zweiten Ablenkung (38) zusätzlich abgelenkt wird,
**dadurch gekennzeichnet,**
**dass** die zweite Ablenkung (38) in einer kardanischen Lagerung (40, 42) erfolgt.
